(19) Europäisches Patentamt
European Patent Office
Office européen des brevets

(11) **EP 2 502 944 B1**

(12) **EUROPÄISCHE PATENTSCHRIFT**

(45) Veröffentlichungstag und Bekanntmachung des Hinweises auf die Patenterteilung:
**03.12.2014 Patentblatt 2014/49**

(51) Int Cl.:
**C08F 220/06** (2006.01)     **C08K 5/053** (2006.01)
**C08K 5/17** (2006.01)     **C09D 133/02** (2006.01)

(21) Anmeldenummer: **12160655.2**

(22) Anmeldetag: **22.03.2012**

(54) **Wässrige bindemittel für körnige und/oder faserförmige substrate**

Aqueous adhesive for fibrous and/or granular substrates

Liant aqueux pour substrats granuleux et/ou fibreux

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.03.2011 EP 11159420**

(43) Veröffentlichungstag der Anmeldung:
**26.09.2012 Patentblatt 2012/39**

(73) Patentinhaber: **BASF SE**
**67056 Ludwigshafen (DE)**

(72) Erfinder:
• **Michl, Kathrin**
  **67063 Ludwigshafen (DE)**
• **Braun, Markus**
  **69118 Heidelberg (DE)**
• **Klimov, Evgueni**
  **67071 Ludwigshafen (DE)**

(56) Entgegenhaltungen:
**WO-A1-2010/034645     DE-C1- 19 956 420**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Gegenstand der vorliegenden Erfindung sind wässrige Bindemittel für körnige und/oder faserförmige Substrate, enthaltend als wirksame Bestandteile

a) wenigstens ein durch radikalische Polymerisation erhältliches Polymerisat, welches

$\geq 5$ und $\leq 100$ Gew.-% wenigstens einer a,β-monoethylenisch ungesättigten Mono- oder Dicarbonsäure und/oder deren Anhydrid (Monomer A1), und
$\geq 0$ und $\leq 95$ Gew.-% wenigstens einer anderen ethylenisch ungesättigten Verbindung, welche mit den Monomeren A1 copolymerisierbar ist (Monomer A2),

in einpolymerisierter Form enthält, wobei sich die Monomerenmengen A1 und A2 zu 100 Gew.-% addieren [Polymerisat A],

b) wenigstens eine stickstofffreie Polyolverbindung mit wenigstens zwei Hydroxygruppen [Polyol B], und

c) wenigstens eine hydroxygruppenfreie organische Stickstoffverbindung mit wenigstens einem $pK_B$-Wert $\leq 7$ (gemessen bei 25 °C in entionisiertem Wasser) und/oder wenigstens eine hydroxygruppenfreie Imidazolverbindung [Stickstoffbase C].

Des Weiteren umfasst die vorliegende Erfindung auch Verfahren zur Herstellung von Formkörpern aus körnigen und/oder faserförmigen Substraten unter Verwendung der vorgenannten wässrigen Bindemittel sowie die erhaltenen Formkörper selbst.

Die Verfestigung von faserförmigen oder körnigen Substraten, insbesondere in flächenförmigen Gebilden, wie beispielsweise Faservliesen, Faserplatten oder Spanplatten etc., erfolgt häufig auf chemischem Weg unter Verwendung eines polymeren Bindemittels. Zur Erhöhung der Festigkeit, insbesondere der Nass- und Wärmestandfestigkeit, werden vielfach Bindemittel eingesetzt, welche Formaldehyd abspaltende Vernetzer enthalten. Damit besteht aber die Gefahr der unerwünschten Formaldehydemission.

Zur Vermeidung von Formaldehydemissionen wurden bereits zahlreiche Alternativen zu den bisher bekannten Bindemitteln vorgeschlagen. So sind aus der US-A 4,076,917 Bindemittel bekannt, welche Carbonsäure- oder Carbonsäureanhydrid-haltige Polymerisate und β-Hydroxyalkylamide als Vernetzer enthalten. Nachteilig ist die relativ aufwendige Herstellung der β-Hydroxyalkylamide.

Aus der EP-A-445578 sind Platten aus feinteiligen Materialien, wie beispielsweise Glasfasern bekannt, in denen Mischungen aus hochmolekularen Polycarbonsäuren und mehrwertigen Alkoholen, Alkanolaminen oder mehrwertigen Aminen als Bindemittel fungieren.

Aus der EP-A-583086 sind formaldehydfreie, wässrige Bindemittel zur Herstellung von Faservliesen, insbesondere Glasfaservliesen, bekannt. Die Bindemittel enthalten eine Polycarbonsäure mit mindestens zwei Carbonsäuregruppen und gegebenenfalls auch Anhydridgruppen sowie ein Polyol. Diese Bindemittel benötigen einen phosphorhaltigen Reaktionsbeschleuniger, um ausreichende Festigkeiten der Glasfaservliese zu erreichen. Es wird darauf hingewiesen, dass auf die Anwesenheit eines derartigen Reaktionsbeschleunigers nur verzichtet werden kann, wenn ein reaktives Polyol eingesetzt wird. Als hochreaktive Polyole werden β-Hydroxyalkylamide genannt.

Die EP-A-651088 beschreibt entsprechende Bindemittel für Substrate aus Cellulosefaser. Diese Bindemittel enthalten zwingend einen phosphorhaltigen Reaktionsbeschleuniger.

Die EP-A-672920 beschreibt formaldehydfreie Binde-, Imprägnier- oder Beschichtungsmittel, die ein Polymerisat, welches zu 2 bis 100 Gew.-% aus einer ethylenisch ungesättigten Säure oder einem Säureanhydrid als Comonomer aufgebaut ist und mindestens ein Polyol enthalten. Bei den Polyolen handelt es sich um substituierte Triazin-, Triazintrion-, Benzol- oder Cyclohexylderivate, wobei die Polyolreste sich stets in 1,3,5-Position der erwähnten Ringe befinden. Trotz einer hohen Trocknungstemperatur werden mit diesen Bindemitteln auf Glasfaservliesen nur geringe Nassreißfestigkeiten erzielt.

Die DE-A-2214450 beschreibt ein Copolymerisat, das aus 80 bis 99 Gew.-% Ethylen und 1 bis 20 Gew.-% Maleinsäureanhydrid aufgebaut ist. Das Copolymerisat wird, zusammen mit einem Vernetzungsmittel, in Pulverform oder in Dispersion in einem wässrigen Medium, zur Oberflächenbeschichtung verwendet. Als Vernetzungsmittel wird ein aminogruppenhaltiger Polyalkohol verwendet. Um eine Vernetzung zu bewirken, muss jedoch auf bis zu 300 °C erhitzt werden.

Aus der US-A 5,143,582 ist die Herstellung hitzebeständiger Vliesmaterialien unter Verwendung eines thermisch aushärtenden, hitzebeständigen Bindemittels bekannt. Das Bindemittel ist frei von Formaldehyd und wird erhalten durch Mischen eines Carbonsäuregruppen, Carbonsäureanhydridgruppen oder Carbonsäuresalzgruppen aufweisenden Polymers und eines Vernetzers. Der Vernetzer ist ein β-Hydroxyalkylamid oder ein Polymer oder Copolymer davon. Das mit dem β-Hydroxyalkylamid vernetzbare Polymer ist beispielsweise aufgebaut aus ungesättigten Mono- oder Dicarbonsäuren, Salzen ungesättigter Mono- oder Dicarbonsäuren oder ungesättigten Anhydriden. Selbsthärtende Polymere werden erhalten durch Copolymerisation der β -Hydroxyalkylamide mit Carboxylgruppen enthaltenden Monomeren.

In der US-A 2004/82689 werden formaldehydfreie wässrige Bindemittel zur Herstellung von Faservliesen, insbesondere Glasfaservliesen, offenbart, welche essentiell aus einer polymeren Polycarbonsäure, einem Polyol und einem Imidazolin-Derivat bestehen. Die erhaltenen gebundenen Faservliese sollen eine reduzierte Wasseraufnahme aufweisen. Es werden unspezifisch sowohl stickstoffhaltige als auch stickstofffreie Polyole offenbart, wobei jedoch insbesondere das stickstoffhaltige Triethanolamin als bevorzugt beschrieben wird. Als spezifische Imidazolin-Derivate werden Umsetzungsprodukte aus einer Fettsäure mit Aminoethylethanolamin oder Diethylentriamin genannt. Die offenbarten wässrigen Bindemittelzusammensetzungen enthalten einen phosphorhaltigen Reaktionsbeschleuniger.

Gemäß der WO 99/09100 sind thermisch härtbare Zusammensetzungen und deren Verwendung als formaldehydfreie Bindemittel zur Herstellung von Formkörpern offenbart, welche neben einem Alkanolamin mit wenigstens zwei OH-Gruppen, ein Polymerisat 1, welches ≤ 5 Gew.-% und ein weiteres Polymerisat 2, welches ≥ 15 Gew.-% einer $\alpha,\beta$-ethylenisch ungesättigten Mono- oder Dicarbonsäure in einpolymerisierter Form enthält.

Des Weiteren offenbart die WO10/34645 wässrige Bindemittelsysteme für körnige und/oder faserförmige Substrate, welche als wirksame Bestandteile ein Polymerisat 1, enthaltend ≥ 5,5 Gew.-% und ≤ 20 Gew.-% einer $\alpha,\beta$-ethylenisch ungesättigten Mono- oder Dicarbonsäure in einpolymerisierter Form, ein Polymerisat 2, enthaltend ≥ 40 Gew.-% einer $\alpha,\beta$-ethylenisch ungesättigten Mono- oder Dicarbonsäure in einpolymerisierter Form und eine Polyolverbindung mit wenigstens zwei Hydroxylgruppen.

In einer prioritätsbegründenden und nicht vorveröffentlichten europäischen Patentanmeldung mit Anmeldenummer 11154347.6 werden wässrige Bindemittel für körnige und/oder faserförmige Substrate offenbart, welche neben einem carbonsäuregruppenhaltigen Polymerisat und einer Polyolverbindung essentiell eine Salzverbindung enthalten. Diese salzhaltigen Bindemittelflotten wirken sich vorteilhaft auf die Nassreißkraft sowie die Reißkraft bei 180 °C der damit gebundenen Faservliese aus.

Allerdings vermögen die mit den vorgenannten Zusammensetzungen hergestellten Formkörper, insbesondere Faservliese, nicht immer in allen mechanischen Eigenschaften, insbesondere der Nassreißkraft sowie darüber hinaus der Vergilbung voll zu befriedigen.

Aufgabe der vorliegenden Erfindung war es, ein alternatives formaldehydfreies wässriges Bindemittelsystem für faserförmige und/oder körnige Substrate zur Verfügung zu stellen, durch welches bei Faservliesen verbesserte mechanische und/oder optische Eigenschaften, wie insbesondere der Nassreißkraft und/oder der Vergilbung resultieren.

Demgemäß wurde das eingangs definierte wässrige Bindemittel gefunden.

Polymerisat A enthält ≥ 5 Gew.-% und ≤ 100 Gew.-%, bevorzugt ≥ 70 Gew.-% und ≤ 100 Gew.-% und insbesondere bevorzugt ≥ 85 Gew.-% und ≤ 100 Gew.-% wenigstens einer $\alpha,\beta$-monoethylenisch ungesättigten Mono- oder Dicarbonsäure und/oder deren Anhydrid (Monomere A1) und dementsprechend ≥ 0 Gew.-% und ≤ 95 Gew.-%, bevorzugt ≥ 0 Gew.-% und ≤ 30 Gew.-% und insbesondere bevorzugt ≥ 0 Gew.-% und ≤ 15 Gew.-% wenigstens eines anderen, sich von den $\alpha,\beta$-monoethylenisch ungesättigten Mono- oder Dicarbonsäuren und/oder deren Anhydrid unterscheidenden Monomers (Monomere A2) in einpolymerisierter Form. Dabei addieren sich die Monomeren A1 und die Monomeren A2 zu 100 Gew.-%. Mit besonderem Vorteil ist das Polymerisat A jedoch ausschließlich aus Monomeren A1 aufgebaut.

Bei den Monomeren A1 handelt es sich um $\alpha,\beta$-monoethylenisch ungesättigte, insbesondere $C_3$- bis $C_6$-, bevorzugt $C_3$- oder $C_4$-Mono- oder Dicarbonsäuren sowie deren voll- oder teilneutralisierten wasserlöslichen Salze, insbesondere deren Alkalimetall- oder Ammoniumsalze. Genannt seien beispielsweise Acrylsäure, Methacrylsäure, Ethylacrylsäure, Itaconsäure, Allylessigsäure, Crotonsäure, Vinylessigsäure, Fumarsäure, Maleinsäure, 2-Methylmaleinsäure, aber auch Halbester von ethylenisch ungesättigten Dicarbonsäuren, wie Maleinsäuremonoalkylester von $C_1$- bis $C_8$-Alkoholen sowie die Ammonium-, Natrium- oder Kaliumsalze der vorgenannten Säuren. Die Monomeren A1 umfassen aber auch die Anhydride entsprechender $\alpha,\beta$-monoethylenisch ungesättigter Dicarbonsäuren, wie beispielsweise Maleinsäureanhydrid oder 2-Methylmaleinsäureanhydrid. Bevorzugt ist das Monomer A1 ausgewählt aus der Gruppe umfassend Acrylsäure, Methacrylsäure, Crotonsäure, Fumarsäure, Maleinsäure, Maleinsäureanhydrid, 2-Methylmaleinsäure und Itaconsäure, wobei jedoch Acrylsäure, Methacrylsäure, Maleinsäure, Maleinsäureanhydrid und/oder Itaconsäure insbesondere bevorzugt sind.

Als Monomere A2 kommen alle ethylenisch ungesättigten Monomere in Betracht, welche sich von den Monomeren A1 unterscheiden und mit diesen copolymerisierbar sind. Als Monomere A2 beispielhaft genannt seien vinylaromatische Verbindungen, wie Styrol, $\alpha$-Methylstyrol, o-Chlorstyrol oder Vinyltoluole, Vinylhalogenide, wie Vinylchlorid oder Vinylidenchlorid, Ester aus Vinylalkohol und 1 bis 18 C-Atome, bevorzugt 2 bis 12 C-Atome aufweisenden Monocarbonsäuren, wie Vinylacetat, Vinylpropionat, Vinyl-n-butyrat, Vinyllaurat und Vinylstearat, $C_1$- bis $C_{12}$-Alkylvinylether, wie Methylvinylether, Ethylvinylether, n-Propylvinylether, n-Butylvinylether, n-Pentylvinylether, n-Hexylvinylether, Ester aus vorzugsweise 3 bis 6 C-Atome aufweisenden $\alpha,\beta$-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl-, pentyl-, -hexyl-, -heptyl-, - octyl-, -nonyl-, -decyl- und -2-ethylhexylester, Fumar- und Maleinsäuredimethylester oder -di-n-butylester, Nitrile $\alpha,\beta$-monoethylenisch ungesättigter Carbonsäuren, wie Acrylnitril, Methacrylnitril, Fumarsäuredinitril, Maleinsäuredinitril sowie $C_{4-8}$-konjugierte Diene, wie 1,3-Butadien (Butadien) und Isopren in Betracht. Die vorgenannten Monomere bilden in der Regel $\geq 50$ Gew.-%, bevorzugt $\geq$ 80 Gew.-% und insbesondere bevorzugt $\geq 90$ Gew.-% der Gesamtmenge aller Monomeren A2 und stellen somit die Hauptmonomeren A2 dar. Erfindungsgemäß bevorzugt enthält das Polymerisat A als Hauptmonomer A2 einen Ester der Acrylsäure oder Methacrylsäure mit einem $C_1$- bis $C_{12}$-Alkohol, insbesondere Methylacrylat, Ethylacrylat, n-Butylacrylat , 2-Ethylhexylacrylat oder Methylmethacrylat, eine vinylaromatische Verbindung, insbesondere Styrol, ein Nitril einer $\alpha,\beta$-monoethylenisch ungesättigten Carbonsäure, insbesondere Acrylnitril und/oder einen Vinylester einer $C_2$- bis $C_{12}$-Monocarbonsäure in einpolymerisierter Form.

Weiterhin kommen als Monomere A2 im untergeordnetem Maße solche ethylenisch ungesättigten Monomere in Betracht, die entweder wenigstens eine Sulfonsäuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien Acrylamid und Methacrylamid, ferner Vinylsulfonsäure, 2-Acryl-amido-2-methylpropansulfonsäure, Styrolsulfonsäure und deren wasserlösliche Salze sowie N-Vinylpyrrolidon, 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Di-ethylamino)ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat. Die vorgenannten Monomere A2 werden in der Regel in Mengen $\leq 10$ Gew.-%, bevorzugt $\leq 8$ Gew.-% und insbesondere $\leq 5$ Gew.-%, jeweils bezogen auf die Gesamtmenge an Monomeren A2, eingesetzt. Als bevorzugtes Monomer wird Acrylamid und/oder Methacrylamid in einer Menge von $\geq 0,5$ und $\leq 4$ Gew.-%, bezogen auf die Gesamtmenge an Monomeren A2 eingesetzt.

Monomere A2, die üblicherweise die innere Festigkeit der Verfilmungen einer Polymermatrix erhöhen, weisen normalerweise wenigstens eine Epoxy-, wenigstens eine Carbonylgruppe oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die DiEster zweiwertiger Alkohole mit $\alpha,\beta$-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylat und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. Die vorgenannten Monomere A2 werden in der Regel in Mengen $\leq 10$ Gew.-%, bevorzugt $\leq 5$ Gew.-% und insbesondere $\leq 2$ Gew.-%, jeweils bezogen auf die Gesamtmenge an Monomeren A2, eingesetzt.

Wird ein Monomer A2 zur Herstellung des Polymerisats A eingesetzt, so ist dieses vorteilhaft ausgewählt aus der Gruppe umfassend Methylacrylat, Ethylacrylat, n-Butylacrylat, 2-Ethylhexylacrylat, Methylmethacrylat und Styrol.

Bevorzugt ist das Polymerisat A jedoch aufgebaut ist aus

| | |
|---|---|
| $\geq 70$ und $\leq 100$ Gew.-% | wenigstens eines Monomeren A1, und |
| $\geq 0$ und $\leq 30$ Gew.-% | wenigstens eines Monomeren A2 |

und insbesondere bevorzugt aus

| | |
|---|---|
| $\geq 85$ und $\leq 100$ Gew.-% | Acrylsäure, Methacrylsäure, Maleinsäure, Maleinsäureanhydrid und/oder Itaconsäure, und |
| $\geq 0$ und $\leq 15$ Gew.-% | Methylacrylat, Ethylacrylat, n-Butylacrylat, 2-Ethylhexylacrylat, Methylmethacrylat und/oder Styrol |

in einpolymerisierter Form.

Mit besonderem Vorteil ist das Polymerisat A jedoch ausschließlich aus Monomeren A1, insbesondere aus Acrylsäure bzw. Acrylsäure und Maleinsäure(anhydrid) in einpolymerisierter Form aufgebaut.

Die Herstellung der Polymerisate A ist dem Fachmann geläufig und erfolgt beispielsweise durch radikalische Polymerisation der Monomere A1 und A2 nach der Methode der Substanz-, Emulsions-, Lösungs-, Fällungs- oder Suspensionspolymerisation (siehe hierzu auch die Herstellung der entsprechenden Polymerisate in der WO 99/09100, Seite 5, Zeile 12 bis Seite 13, Zeile 7). Bevorzugt werden die Polymerisate A durch radikalisch initiierte wässrige Emulsionspolymerisation bzw. durch Lösungspolymerisation hergestellt. Dabei erfolgt die Herstellung der Polymerisate A durch radikalisch initiierte wässrige Emulsionspolymerisation insbesondere dann, wenn das zur Polymerisation eingesetzte Monomerengemisch in solchen Mengen Monomere A2 enthält, dass sich im wässrigen Polymerisationsmedium eine separate Monomerphase ausbildet.

Die Durchführung von radikalisch initiierten Emulsionspolymerisationen von ethylenisch ungesättigten Monomeren in einem wässrigen Medium ist vielfach vorbeschrieben und dem Fachmann daher hinreichend bekannt [vgl. hierzu Emulsionspolymerisation in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin (1969)]. Die radikalisch initiierten wässrigen Emulsionspolymerisationsreaktionen erfolgen üblicherweise dergestalt, dass die ethylenisch ungesättigten Monomere unter Mitverwendung von Dispergierhilfsmitteln, im wässrigen Medium in Form von Monomerentröpfchen dispers verteilt und mittels eines radikalischen Polymerisationsinitiators polymerisiert werden, wobei wässrige Polymerisatdispersionen gebildet werden.

Die erfindungsgemäß eingesetzten wässrigen Polymerisatdispersionen weisen üblicherweise Polymerfeststoffgehalte an Polymerisat A von $\geq 10$ und $\leq 70$ Gew.-%, häufig $\geq 20$ und $\leq 65$ Gew.-% und oft $\geq 40$ und $\leq 60$ Gew.-%, jeweils bezogen auf die wässrige Polymerisatdispersion, auf. Der über quasielastische Lichtstreuung (ISO-Norm 13321) ermittelte zahlenmittlere Teilchendurchmesser der Emulsionspolymerisate A (cumulant z-average) liegt in der Regel zwischen 10 und 2000 nm, vorteilhaft zwischen 20 und 1000 nm und insbesondere vorteilhaft zwischen 50 und 700 nm bzw. 80 bis 400 nm.

Auch die radikalisch initiierte Lösungspolymerisation ist dem Fachmann geläufig und erfolgt insbesondere in Wasser oder einem organischen Lösungsmittel (siehe beispielsweise A. Echte, Handbuch der Technischen Polymerchemie, Kapitel 6, VCH, Weinheim, 1993 oder B. Vollmert, Grundriss der Makromolekularen Chemie, Band 1, E. Vollmert Verlag, Karlsruhe, 1988; L. Kotzeva, J. Polym. Sci. A-27, 1989 (4), Seiten 1325ff; C. Erbil et al., Polymer 41, 2000, Seiten 1391ff; C. Yang, X. Lu Yun, J. Polym. Sci. 75(2), 2000, Seiten 327ff; M. Sen et al., Polymer 40(9), 1999, Seiten 913ff; F. Wang et al., Anal. Chem. 68, 1996, Seiten 2477ff; J. Velada et al., Macromol. Chem. and Phys. 196, 1995, Seiten 3171ff; J.M. Cowie, C. Haq, Br. Polym. J. 9, 1977, Seiten 241ff; J. Velada et al., Polymer Degradation and Stability 52, 1996, Seiten 273ff; A. Horta et al., Makromol. Chem., Rapid Commun. 8, 1987, Seiten 523ff; T. Hirano et al., J. Polym. Sci. A-38, 2000, Seiten 2487ff; B.E. Tate, Adv. Polymer Sci. 5, 1967, Seiten 214ff). Erfolgt dabei die Herstellung von Polymerisat A in einem organischen Lösungsmittel, so wird in der Regel das organische Lösungsmittel nach Abschluss der Polymerisation zumindest teilweise, vorteilhaft zu $\geq 50$ Gew.-% oder $\geq 90$ Gew.-% und insbesondere vorteilhaft vollständig entfernt und das Polymerisat A in Wasser, vorteilhaft in entionisiertem Wasser aufgenommen. Die entsprechenden Verfahren sind dem Fachmann geläufig. So kann beispielsweise der Austausch des Lösungsmittels gegen Wasser derart erfolgen, dass das Lösungsmittel, beispielsweise bei Normaldruck (1 atm absolut) oder im Unterdruck (< 1 atm absolut) zumindest teilweise, vorteilhaft vollständig in einer oder mehreren Stufen abdestilliert und durch Wasser ersetzt wird. Häufig kann es günstig sein, das Lösungsmittel durch Einleiten von Wasserdampf aus der Lösung zu entfernen und dabei gleichzeitig durch Wasser zu ersetzen. Dies ist insbesondere dann der Fall, wenn das organische Lösungsmittel eine gewisse Wasserdampfflüchtigkeit aufweist. Die dabei erhaltenen und im erfindungsgemäßen wässrigen Bindemittel eingesetzten wässrigen Polymerisatlösungen weisen üblicherweise Polymerfeststoffgehalte an Polymerisat A von $\geq 10$ und $\leq 70$ Gew.-%, häufig $\geq 20$ und $\leq 65$ Gew.-% und oft $\geq 40$ und $\leq 60$ Gew.-%, jeweils bezogen auf die wässrige Polymerisatlösung, auf.

Vorteilhaft wird das Polymerisat A in einer in einem wässrigen Medium gelösten oder dispergierten Form eingesetzt (wässrige Polymerisat A-Lösung oder wässrige Polymerisat A-Dispersion).

Häufig weist das Polymerisat A im Falle der Herstellung durch radikalisch initiierte wässrige Emulsionspolymerisation eine Glasübergangstemperatur Tg im Bereich $\geq 0$ und $\leq 170$ °C, vorteilhaft $\geq 10$ und $\leq 100$ °C und insbesondere vorteilhaft $\geq 20$ und $\leq 80$ °C auf. Dabei ist mit der Glasübergangstemperatur Tg, der Grenzwert der Glasübergangstemperatur gemeint, dem diese gemäß G. Kanig (Kolloid-Zeitschrift & Zeitschrift für Polymere, Bd. 190, S. 1, Gleichung 1) mit zunehmendem Molekulargewicht zustrebt. Als Glasübergangstemperatur Tg ist im Rahmen dieser Schrift diejenige Glasübergangstemperatur gemeint, welche nach dem DSC-Verfahren (Differential Scanning Calorimetry, 20 K/min, midpoint-Messung, DIN 53765) ermittelt wurde. Handelt es sich bei den Polymeriaten A jedoch um Copolymerisate, welche aus $\geq 60$ und $\leq 100$ Gew.-% an Monomeren A1 in einpolymerisierter Form aufgebaut sind, so lässt sich häufig die Glasübergangstemperatur nicht nach dem DSC-Verfahren ermitteln, da sich die Polymerisate A vor Erreichen ihrer Glasübergangstemperatur zersetzen. In diesen Fällen lässt sich die Glasübergangstemperatur nach der sogenannten Foxgleichung ermitteln.

Durch die sogenannte Foxgleichung ist es dem Fachmann auch möglich, Polymerisate A im geeigneten Tg-Bereich zu identifizieren und diese durch geeignete Variation von Art und Menge der Monomeren A und B gezielt herzustellen.

Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/T_g = x^1/T_g^1 + x^2/T_g^2 + \ldots x^n/T_g^n,$$

wobei $x^1$, $x^2$, .... $x^n$ die Massenbrüche der Monomeren 1, 2, .... n und $T_g^1$, $T_g^2$, .... $T_g^n$ die Glasübergangstemperaturen der jeweils nur aus einem der Monomeren 1, 2, .... n aufgebauten Polymerisaten in Grad Kelvin bedeuten. Die Tg-Werte für die Homopolymerisate der meisten Monomeren sind bekannt und z.B. in Ullmann's Encyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J.Wiley, New York 1975, und 3rd Ed. J. Wiley, New York 1989).

Ist das Polymerisat A zu ≥ 85 Gew.-% und ≤ 100 Gew.-% und insbesondere zu 100 Gew.-% aus Monomeren A1 aufgebaut, so weist dieses erfindungsgemäß ein gewichtsmittleres Molekulargewicht im Bereich ≥ 1000 und ≤ 1000000 g/mol, vorteilhaft ≥ 10000 und ≤ 200000 g/mol und insbesondere vorteilhaft ≥ 50000 und ≤ 100000 g/mol auf. Die Bestimmung des gewichtsmittleren Molekulargewichts ist dem Fachmann geläufig und erfolgt insbesondere durch Gelpermeationchromatographie unter Verwendung von Standardpolymeren mit definiertem Molekulargewicht.

Selbstverständlich ist es auch möglich, die wässrigen Dispersionen oder Lösungen des Polymerisats A durch Trocknung, beispielsweise durch die dem Fachmann geläufigen Sprüh- oder Gefriertrocknungsverfahren, in die entsprechenden Polymerisat A-Pulver zu überführen und daraus das erfindungsgemäße wässrige Bindemittel herzustellen.

Erfindungsgemäß enthält das wässrige Bindemittel neben dem Polymerisat A als wirksamen Bestandteil noch eine stickstofffreie Polyolverbindung mit wenigstens 2 Hydroxylgruppen (Polyol B). Dabei werden vorteilhaft solche Polyole B eingesetzt, die bei den Temperaturen der Trocknung bzw. Aushärtung nicht oder lediglich gering flüchtig sind und daher einen entsprechend niedrigen Dampfdruck aufweisen.

Dabei kann das Polyol B prinzipiell eine Verbindung mit einem Molekulargewicht ≤ 1000 g/mol oder eine polymere Verbindung mit einem Molekulargewicht > 1000 g/mol sein. Als polymere Verbindungen mit wenigstens 2 Hydroxylgruppen seien beispielhaft Polyvinylalkohol, teilhydrolysiertes Polyvinylacetat, Homo- oder Copolymerisate von Hydroxyalkylacrylaten oder Hydroxyalkylmethacrylaten, wie beispielsweise Hydroxyethylacrylat bzw. -methacrylat oder Hydroxypropylacrylat bzw. -methacrylat genannt. Beispiele weiterer erfindungsgemäß einsetzbarer polymerer Polyole B finden sich u.a. in WO 97/45461, Seite 3, Zeile 3 bis Seite 14, Zeile 33. Wird Polyvinylalkohol als Polyol B eingesetzt, so beträgt dessen gewichtsmittleres Molekulargewicht vorteilhaft ≥ 5000 und ≤ 100000 g/mol und insbesondere vorteilhaft ≥ 10000 und ≤ 50000 g/mol.

Als Polyol B mit einem Molekulargewicht ≤ 1000 g/mol kommen alle die organischen Verbindung in Betracht, die wenigstens 2 Hydroxylgruppen und ein Molekulargewicht ≤ 1000 g/mol aufweisen. Beispielhaft genannt seien Ethylenglykol, 1,2-Propylenglykol, Glyzerin, 1,2- bzw. 1,4-Butandiol, Pentaerythrit, Trimethylolpropan, Sorbit, Saccharose, Glucose, 1,2-, 1,3- bzw. 1,4-Dihydroxybenzol, 1,2,3-Trihydroxybenzol, 1,2-, 1,3- bzw. 1,4-Dihydroxycyclohexan.

Erfindungsgemäß bevorzugt werden Polyole B mit einem Molekulargewicht ≤ 1000 g/mol immer dann eingesetzt, wenn neben der verbesserten mechanischen Festigkeit zusätzlich eine geringe Vergilbungsneigung der erfindungsgemäß zugänglichen Formköper erwünscht ist.

Erfindungsgemäß bevorzugt wird daher wenigstens ein Polyol B eingesetzt, welches ausgewählt ist aus der Gruppe umfassend Glyzerin, Trimethylolpropan und Polyvinylalkohol, wobei Glyzerin und/oder Trimethylolpropan besonders bevorzugt ist.

Bei den erfindungsgemäßen Bindemitteln werden das Polymerisat A und das Polyol B bevorzugt in einem solchen Mengenverhältnis zueinander eingesetzt, dass das Gewichtsverhältnis von Polymerisat A zu Polyol B (auf Feststoffbasis) 100:1 bis 1:2, vorteilhaft 50:1 bis 1,5:1 und insbesondere vorteilhaft 10:1 bis 2:1 beträgt.

Insbesondere vorteilhaft werden die Mengen an Polymerisat A und Polyol B so gewählt, dass das Verhältnis der Anzahl von Äquivalenten Carboxylgruppen des Polymerisats A zu der Anzahl von Äquivalenten Hydroxylgruppen des Polyols B im Bereich 20:1 bis 1:1, bevorzugt 15:1 bis 1,5:1 und besonders bevorzugt 12:1 bis 2:1 beträgt (wobei eine Anhydridgruppe hierbei als zwei Carboxylgruppen berechnet werden).

Erfindungsgemäß enthält das wässrige Bindemittel neben dem Polymerisat A und dem Polyol B als essentiellen Bestandteil noch wenigstens eine hydroxygruppenfreie organische Stickstoffverbindung mit wenigstens einem $pK_B$-Wert ≤ 7 (gemessen bei 25 °C in entionisiertem Wasser) und/oder wenigstens eine hydroxygruppenfreie Imidazolverbindung [Stickstoffbase C].

Bei dem $pK_B$-Wert handelt es sich um eine dem Fachmann geläufige Konstante zur Charakterisierung von Basen, welche angibt, wie stark das Bestreben einer Base ist, Protonen aufzunehmen. Dabei gilt, je kleiner der $pK_B$-Wert, desto stärker ist das Bestreben einer Base, Protonen aufzunehmen. Die Bestimmung von $pK_B$-Werten ist dem Fachmann geläufig und erfolgt insbesondere durch Titration in wässriger Lösung (siehe beispielsweise G. Jander, K.F. Jahr, G. Schulze, Maßanalyse, 16. Auflage, Seite 81, Walter de Gruyter, 2002). Die $pK_B$-Werte für die geläufigen Basen sind bekannt und beispielsweise in den einschlägigen elektronischen Nachschlagewerken, wie www.Kass-net.de (und den darin zitierten Nachschlagewerken) aufgelistet. Sollten von einer Verbindung lediglich der entsprechend korrespondierende Wert der Säurestärke $pK_S$ zur Verfügung stehen (wie beispielsweise in P. Sykes, A Guidebook to Mechanism in Organic Chemistry, Forth Imprssion 1963, Seiten 49 ff), so lässt sich daraus in einfacher Weise der $pK_B$-Wert nach folgender Gleichung ermitteln:

$$pK_B = 14 - pK_S$$

Selbstverständlich ist es auch möglich, dass eine hydroxygruppenfreie organische Stickstoffverbindung mehr als einen $pK_B$-Wert aufweist. Sollte dies der Fall sein, so muss die erfindungsgemäß einsetzbare hydroxygruppenfreie organische Stickstoffverbindung jedoch wenigstens einen $pK_B$-Wert $\leq 7$ aufweisen.

Beispiele für hydroxygruppenfreie organische Stickstoffverbindung mit wenigstens einem $pK_B$-Wert $\leq 7$ sind Mono-, Di- oder Trialkylamine, wie insbesondere n-Propylamin, n-Butylamin, n-Hexylamin, Diethylamin, Di-n-propylamin, Di-n-butylamin, Triethylamin und/oder Tri-n-propylamin.

Neben den hydroxygruppenfreien organischen Stickstoffverbindungen mit wenigstens einem $pK_B$-Wert $\leq 7$ lassen sich als Stickstoffbase C auch noch hydroxygruppenfreie Imidazolverbindungen einsetzen. Zu den hydroxygruppenfreien Imidazolverbindungen zählen beispielsweise das Imidazol selbst, sowie dessen in 1-, 2-, 4- und/oder 5-Stellung, bevorzugt jedoch in 1-Stellung mit $C_1$-$C_5$-Alkylgruppen, beispielsweise einer Methyl-, Ethyl- n-Propyl-, Isopropyl-, n-Butyl-, tert.-Butyl-, Isobutyl-, n-Pentyl-, tert.-Pentyl-, Isopentylgruppe substituierten Derivate. Bevorzugte Imidazolverbindungen sind Imidazol und/oder 1-Methylimidazol.

Die erfindungsgemäß einsetzbaren Stickstoffbasen C weisen vorteilhaft bei 20 °C und 1 atm (= 1,013 bar absolut) eine Löslichkeit $\geq 0,5$ g, bevorzugt $\geq 2$ g und insbesondere bevorzugt $\geq 5$ g in 100 g entionisiertem Wasser auf.

Des Weiteren ist es vorteilhaft, wenn die zur Herstellung des erfindungsgemäßen wässrigen Bindemittels verwendeten Stickstoffbasen C bei 1 atm einen Siedepunkt $\geq 40$ °C, bevorzugt $\geq 55$ °C und insbesondere bevorzugt $\geq 70$ °C aufweisen.

Die zur Herstellung des erfindungsgemäßen wässrigen Bindemittels eingesetzte wenigstens eine Stickstoffbase C ist vorteilhaft ausgewählt ist aus der Gruppe umfassend n-Propylamin, n-Butylamin, n-Hexylamin, Diethylamin, Di-n-propylamin, Di-n-butylamin, Triethylamin, Tri-n-propylamin, Imidazol und 1-Methylimidazol, wobei n-Propylamin, n-Butylamin, n-Hexylamin, Diethylamin, Di-n-propylamin, Di-n-butylamin, Triethylamin und/oder Tri-n-propylamin insbesondere bevorzugt sind.

Im erfindungsgemäßen wässrigen Bindemittel beträgt die Menge an Stickstoffbase C $\geq 0,1$ und $\leq 20$ Gew.-Teile, vorteilhaft $\geq 2$ und $\leq 17$ Gew.-Teile und insbesondere vorteilhaft $\geq 5$ und $\leq 15$ Gew.-Teile, jeweils bezogen auf 100 Gew.-Teile Polymerisat A

Wesentlich ist, dass das erfindungsgemäße wässrige Bindemittel neben den vorgenannten Komponenten Polymerisat A, Polyol B und Stickstoffbase C optional auch noch einen phosphorgruppenhaltigen Reaktionsbeschleuniger enthalten kann. Bei den phosphorgruppenhaltigen Reaktionsbeschleunigern handelt sich insbesondere um Polyphosphorsäure, Hypophosphorsäure, Phosphorsäure, Alkylphosphinsäure oder Oligomere bzw. Polymere dieser Säuren sowie deren Salze. Phosphorgruppenhaltige Reaktionsbeschleuniger sind dem Fachmann bekannt und beispielsweise in der EP-A 583086, Seite 6, Zeilen 18 bis 29, EP-A 651088, Seite 5, Zeilen 30 bis 42 oder US-A 2004/82689, Abschnitt [0031] offenbart. Durch ihre ausdrückliche Bezugnahme sollen die Offenbarungen beider Literaturstellen Gegenstand dieser Schrift sein.

Im erfindungsgemäßen wässrigen Bindemittel kann die Menge an phosphorgruppenhaltigen Reaktionsbeschleuniger bis zu 40 Gew.-Teilen und oft $\geq 2,5$ und $\leq 10$ Gew.-Teile jeweils bezogen auf 100 Gew.-Teile der Summe der Gesamtmengen an Polymerisat A und Polyol B, betragen. Wesentlich ist jedoch, dass das erfindungsgemäße Bindemittel in einer Ausführungsform vorteilhaft < 1 Gew.-Teil, bevorzugt $\leq 0,5$ Gew.-Teile und insbesondere bevorzugt $\leq 0,1$ Gew.-Teile an phosphorgruppenhaltigem Reaktionsbeschleuniger, jeweils bezogen auf 100 Gew.-Teile der Summe der Gesamtmengen an Polymerisat A und Polyol B enthält. Mit besonderem Vorteil enthält das erfindungsgemäße Bindemittel in dieser Ausführungsform keinerlei Phosphorkomponente.

Des Weiteren kann das erfindungsgemäße wässrige Bindemittel auch weitere, dem Fachmann geläufige optionale Hilfsstoffe, wie beispielsweise so genannte Verdicker, Entschäumer, Neutralisationsmittel, Puffersubstanzen, Konservierungsmittel, feinteilige inerte Füllstoffe, wie Aluminiumsilikate, Quarz, gefällte oder pyrogene Kieselsäure, Leicht- oder Schwerspat, Talkum oder Dolomit, farbgebende Pigmente, wie Titanweiß, Zinkweiß oder Eisenoxidschwarz, Haftvermittler und/oder Flammschutzmittel enthalten.

Soll das erfindungsgemäße wässrige Bindemittel als Bindemittel für Mineralfasern und/oder Glasfasern bzw. daraus hergestellte Vliese eingesetzt werden, so wird dem wässrigen Bindemittel vorteilhaft ≥ 0,001 und ≤ 5 Gew.-% und insbesondere vorteilhaft ≥ 0,05 und 2 Gew.-%, bezogen auf die Summe der Gesamtmengen an Polymerisat A, Polyol B und Stickstoffbase C, wenigstens einer siliziumhaltigen organischen Verbindung (Haftvermittler), beispielsweise eines Alkoxysilans, wie Methyltrimethoxysilan, n-Propyltrimethoxysilan, n-Octyltrimethoxysilan, n-Decyltriethoxysilan, n-Hexadecyltrimethoxysilan, Dimethyldimethoxysilan, Trimethylmethoxysilan, 3-Acetoxypropyltrimethoxysilan, 3-Aminopropyltrimethoxysilan, 3-Aminopropyltriethoxysilan, 3-Chloropropyltrimethoxysilan, (3-Glycidyloxypropyl)trimethoxysilan, 3-Mercaptopropyltrimethoxysilan und/oder Phenyltrimethoxysilan zugesetzt, wobei funktionalisierte Alkoxysilane, wie 3-Acetoxypropyltrimethoxysilan, 3-Aminopropyltrimethoxysilan, 3-Aminopropyltriethoxysilan, 3-Chloropropyltrimethoxysilan, (3-Glycidyloxypropyl)trimethoxysilan und/oder 3-Mercaptopropyltrimethoxysilan besonders bevorzugt sind.

Selbstverständlich kann das erfindungsgemäße wässrige Bindemittel in Mengen < 5 Gew.-% noch wasserlösliche organische Lösungsmittel [Löslichkeit > 10 g pro 100 g entionisiertem Wasser bei 20 °C und 1 atm (absolut)], wie beispielsweise Aceton, Methanol, Ethanol und/oder Isopropanol enthalten. Mit Vorteil ist jedoch der Gehalt an organischen Lösungsmittel im wässrigen Bindemittel ≤ 1 Gew.-% und insbesondere bevorzugt ≤ 0,5 Gew.-%.

Das erfindungsgemäße wässrigen Bindemittel weist üblicherweise Feststoffgehalte (gebildet aus der Summe der Gesamtmenge an Polymerisat A, Polyol B und Stickstoffbase C als Feststoff gerechnet) von ≥ 1 und ≤ 80 Gew.-%, vorteilhaft ≥ 20 und ≤ 70 Gew.-% und insbesondere vorteilhaft ≥ 40 und ≤ 60 Gew.-%, jeweils bezogen auf das wässrige Bindemittel auf. Häufig werden diese Bindemittel vor der Anwendung auf den körnigen und/oder faserförmigen Substraten, insbesondere zum Binden von Faservliesen, aus verfahrenstechnischen Gründen mit entionisiertem Wasser auf einen Feststoffgehalt ≥ 1 und ≤ 20 Gew.-% verdünnt.

Das erfindungsgemäße wässrige Bindemittel weist üblicherweise einen pH-Wert (gemessen bei 23 °C; mit entionisiertem Wasser auf einen Feststoffgehalt von 5 Gew.-% verdünnt) im Bereich von ≥ 1 und 10, vorteilhaft ≥ 1,5 und ≤ 6 und insbesondere vorteilhaft ≥ 2 und ≤ 5 auf. Dabei können zur Einstellung des pH-Wertes alle dem Fachmann geläufigen sauren oder basischen Verbindungen eingesetzt werden. Insbesondere werden jedoch solche sauren oder basischen Verbindungen verwendet, die bei den Temperaturen während der Trocknung bzw. Aushärtung nicht flüchtig sind, wie beispielsweise Schwefelsäure oder Phosphorsäure bzw. Natriumhydroxid oder Kaliumhydroxid.

Das erfindungsgemäße wässrige Bindemittel eignet sich vorteilhaft zur Verwendung als Bindemittel für faserförmige und/oder körnige Substrate. Mit Vorteil lässt sich daher das erfindungsgemäße wässrige Bindemittel zur Herstellung von Formkörpern aus faserförmigen und/oder körnigen Substraten einsetzen.

Körnige und/oder faserförmige Substrate sind dem Fachmann geläufig. Beispielsweise handelt es sich hierbei um Holzschnitzel, Holzfasern, Cellulosefasern, Textilfasern, Kunststofffasern, Glasfasern, Mineralfasern oder Naturfasern wie Jute, Flachs, Hanf oder Sisal, aber auch Korkschnitzel, Sand sowie andere organische oder anorganische natürliche und/oder synthetische körnige und/oder faserförmige Verbindungen, deren längste Ausdehnung im Falle von körnigen Substraten ≤ 10 mm, bevorzugt ≤ 5 mm und insbesondere ≤ 2 mm beträgt. Selbstverständlich soll der Begriff Substrat auch die aus Fasern erhältlichen Faservliese, wie beispielsweise so genannte mechanisch verfestigte (beispielsweise genadelte) oder chemisch, beispielsweise mit Melamin/Formaldehyd-Harzen vorgebundene Faservliese mit umfassen. Insbesondere vorteilhaft ist das erfindungsgemäße wässrige Bindemittel als formaldehydfreies Bindemittelsystem für die vorgenannten Fasern bzw. die daraus gebildeten Faservliese, wobei die Faservliese besonders bevorzugt sind, geeignet.

Das Verfahren zur Herstellung eines Formkörpers aus einem körnigen und/oder faserförmigen Substrat und dem vorgenannten wässrigen Bindemittel erfolgt vorteilhaft dergestalt, dass das erfindungsgemäße wässrige Bindemittel gleichmäßig auf das körnige und/oder faserförmige Substrat aufgebracht (imprägniert) wird, gegebenenfalls das mit dem wässrigen Bindemittel behandelte körnige und/oder faserförmige Substrat in Form gebracht wird und das behandelte körnige und/oder faserförmige Substrat anschließend einem thermischen Behandlungsschritt bei einer Temperatur ≥ 100 °C unterzogen wird.

Die Behandlung (Imprägnierung) des körnigen und/oder faserförmigen Substrats mit dem erfindungsgemäßen wässrigen Bindemittel erfolgt in der Regel dergestalt, dass das erfindungsgemäße wässrige Bindemittel gleichmäßig auf die Oberfläche des körnigen und/oder faserförmigen Substrats aufgebracht wird. Dabei wird die Menge an wässrigem Bindemittel so gewählt, dass pro 100 g körnigem und/oder faserförmigem Substrat ≥ 0,1 g und ≤ 100 g, bevorzugt ≥ 1 g und ≤ 50 g und insbesondere bevorzugt ≥ 5 g und ≤ 30 g wässriges Bindemittel (berechnet als Summe der Gesamtmengen an Polymerisat A, Polyol B und Stickstoffbase C auf Feststoffbasis) eingesetzt werden. Die Imprägnierung des körnigen und/oder faserförmigen Substrats ist dem Fachmann geläufig und erfolgt beispielsweise durch Tränkung oder durch Besprühen des körnigen und/oder faserförmigen Substrats.

Dabei ist es erfindungsgemäß möglich, dass das Bindemittel vor dem Aufbringen auf das körnige und/oder faserförmige Substrat in einem separaten Schritt durch beliebiges Mischen Polymerisat A, Polyol B und Stickstoffbase C erhalten wird. Selbstverständlich kann das Bindemittel auch durch Mischen von Polymerisat A mit einem Gemisch aus Polyol B und Stickstoffbase C in wässrigem Medium erhalten werden. Vorteilhaft wird Polymerisat A in Form einer wässrigen Polymerisatdispersion oder in Form einer wässrigen Polymerisatlösung eingesetzt. Erfolgt das Aufbringen des Bindemittels auf das körnige und/oder faserförmige Substrat beispielsweise in einer Mischtrommel oder einer Mischstrecke, so kann das Polymerisat A, das Polyol B und die Stickstoffbase C, insbesondere in Form von wässrigen Lösungen, an räumlich verschieden angeordneten Stellen in die Mischtrommel oder in die Mischstrecke, beispielsweise beim wässrigen Holzaufschluss in die sogenannte "Blowline" zwischen dem Refiner und dem Trockner eindosiert werden. Das Mischen der Komponenten A, B und C erfolgt in diesem Fall erst auf dem körnigen und/oder faserförmigen Substrat. Es ist aber auch möglich, das Polymerisat A, insbesondere in Form seiner wässrigen Dispersion oder Lösung mit dem Polyol B zu mischen und dieses Gemisch der Mischtrommel oder der Mischstrecke zuzuführen. Es ist selbstverständlich aber auch möglich, das Polymerisat A, insbesondere in Form seiner wässrigen Dispersion oder Lösung, das Polyol B und die Stickstoffbase C in einer Mischkammer, Mischdüse oder einer anderen statischen oder dynamischen Mischeinrichtung erst unmittelbar vor dem Aufbringen auf das körnige und/oder faserförmige Substrat zu mischen.

Nach der Imprägnierung wird das körnige und/oder faserförmige Substrat gegebenenfalls in die gewünschte Form gebracht, beispielsweise durch Einbringen in eine beheizbare Presse oder Form. Daran anschließend wird das in Form gebrachte imprägnierte körnige und/oder faserförmige Substrat in einer dem Fachmann geläufigen Art und Weise getrocknet und ausgehärtet.

Häufig erfolgt die Trocknung bzw. Aushärtung des gegebenenfalls in Form gebrachten imprägnierten körnigen und/oder faserförmigen Substrats in zwei Temperaturstufen, wobei die Trocknungsstufe bei einer Temperatur < 100 °C, bevorzugt ≥ 20 °C und ≤ 95 °C und insbesondere bevorzugt ≥ 40 und ≤ 90 °C und die Aushärtungsstufe bei einer Temperatur ≥ 100 °C, bevorzugt ≥ 130 und ≤ 250 °C oder ≥ 160 und ≤ 220 °C und insbesondere bevorzugt ≥ 170 °C und ≤ 210 °C erfolgt.

Die Trocknungsstufe erfolgt dabei vorteilhaft dergestalt, dass bei einer Temperatur < 100 °C so lange getrocknet wird, bis das in Form gebrachte imprägnierte körnige und/oder faserförmige Substrat, welches häufig noch nicht seine endgültige Form aufweist (sogenanntes Halbzeug) eine Restfeuchte ≤ 30 Gew.-%, bevorzugt ≤ 15 Gew.-% und insbesondere bevorzugt ≤ 10 Gew.-% aufweist. Dabei wird die Restfeuchte generell bestimmt, indem ca. 1 g des erhaltenen Halbzeugs bei Raumtemperatur gewogen, dieses daran anschließend für 2 Minuten bei 110 °C getrocknet und daran anschließend abgekühlt und wieder bei Raumtemperatur gewogen wird. Dabei entspricht die Restfeuchte der Gewichtsdifferenz des Halbzeugs vor und nach dem Trocknungsvorgang bei 100 °C, bezogen auf das Gewicht des Halbzeugs vor dem Trocknungsvorgang multipliziert mit dem Faktor 100.

Das so erhaltene Halbzeug ist nach Erwärmen auf eine Temperatur von 95 °C noch verformbar und kann bei dieser Temperatur in die endgültige Form des gewünschten Formkörpers gebracht werden.

Die nachfolgende Aushärtungsstufe erfolgt vorteilhaft dergestalt, dass das Halbzeug bei einer Temperatur ≥ 100 °C solange erhitzt wird, bis dieses eine Restfeuchte ≤ 2 Gew.-%, bevorzugt ≤ 1 Gew.-% oder ≤ 0,5 Gew.-% und insbesondere bevorzugt ≤ 0,1 Gew.-% aufweist, wobei das Bindemittel in Folge einer chemischen Veresterungsreaktion aushärtet.

Häufig erfolgt die Herstellung der Formkörper dadurch, dass das Halbzeug in einer Formpresse in den vorgenannten Temperaturbereichen in die endgültige Form gebracht und daran anschließend ausgehärtet wird.

Selbstverständlich ist es aber auch möglich, dass die Trocknungsstufe und die Aushärtungsstufe der Formkörper in einem Arbeitsschritt, beispielsweise in einer Formpresse erfolgen.

Die nach dem erfindungsgemäßen Verfahren zugänglichen Formkörper, insbesondere Faservliese weisen vorteilhafte Eigenschaften, insbesondere eine verbesserte Nassreißfestigkeit und/oder geringere Vergilbung im Vergleich zu den Formkörpern des Standes der Technik auf.

Die Erfindung soll anhand nachfolgender nicht einschränkender Beispiele erläutert werden.

Beispiele:

Für die folgenden Beispiele/Vergleichsbeispiele wurden eingesetzt:

Polymerisat A

Ein Acrylsäure/Maleinsäure-Copolymerisat bestehend aus 75 Gew.-% Acrylsäure- und 25 Gew.-% Maleinsäureeinheiten mit einem gewichtsmittleren Molekulargewicht von 87000 g/mol in Form einer 47 gew.-%igen wässrigen Lösung.

Polyole B

Glyzerin (> 99 Gew.-%, Fa. Riedel-de Haen)
Trimethylolpropan (> 98 Gew.-%, purum dist., Fa. Sigma Aldrich)

Stickstoffbasen C

Triethylamin (99 Gew.-%, Fa. Sigma Aldrich)
n-Dipropylamin (99 Gew.-%, Fa. ACROS ORGANICS)
n-Hexylamin (99 Gew.-%, Fa. ACROS ORGANICS)
Imidazol (> 99 Gew.-%, Fa. BASF SE)
1-Methylimidazol (99 Gew.-%, Fa. ACROS ORGANICS)

Zur Herstellung der wässrigen Bindemittelflotten wurden bei 20 bis 25 °C (Raumtemperatur) jeweils 1000 g der vorgenannten 47 gew.-%igen wässrigen Lösung des Acrylsäure/Maleinsäure-Copolymerisats in einem 5 I-Becherglas vorgelegt, unter Rühren jeweils 141 g Polyol B zugegeben. Zu diesen Lösungen wurden 3,5 g 3-Aminopropyltriethoxysilan (Silquest® A-1100 Silane der Fa. Momentive Performance Materials) sowie die in Tabelle 1 jeweils angegebenen Stickstoffbasen C in den jeweils angegebenen Mengen zugegeben und durch 10 minütiges Rühren homogen gemischt. Daran anschließend wurden die jeweiligen Lösungen durch Zugabe von entionisiertem Wasser auf einen Feststoffgehalt von 5 Gew.-% verdünnt. Die erhaltenen Lösungen werden als Bindemittelflotten A1 bis A7 bezeichnet. Den Vergleichsflotten V1 und V2 wurden keine Stickstoffbasen C zugemischt. Der Vergleichsflotte V3 wurde anstelle eines Polyols B und einer Stickstoffbase C lediglich Triethanolamin (> 99 Gew.-%, Fa. BASF SE) zugemischt.

Tabelle 1: Art des Polyols B sowie Art und Mengen der Stickstoffbasen C bei der Herstellung der Bindemittelflotten
A1 bis A7 sowie der Vergleichsflotten V1 bis V3

| Bindemittelflotte | Polyol B | Stickstoffbase C | Menge Stickstoffbase [in g] |
|---|---|---|---|
| V1 | Glyzerin | - | |
| A1 | Glyzerin | Triethylamin | 30,6 |
| A2 | Glyzerin | Triethylamin | 61,2 |
| A3 | Glyzerin | Di-n-propylamin | 30,6 |
| A4 | Glyzerin | n-Hexylamin | 30,6 |
| A5 | Glyzerin | Imidazol | 30,6 |
| A6 | Glyzerin | 1-Methyl-Imidazol | 30,6 |
| V2 | Trimethylolpropan | - | - |
| A7 | Trimethylolpropan | Triethylamin | 30,6 |
| V3 | Triethanolamin | | 141 |

Zur Herstellung der Formkörper wurden Glasfaservliese (27 X 28,5 cm) der Firma Whatman GF/A No. 1820-915 mit einem Flächengewicht von 54 g/m$^2$ eingesetzt.

Zum Aufbringen der Bindemittelflotten (Imprägnierung) wurden die Glasfaservliese in Längsrichtung über ein Endlos-PES-Siebband mit einer Bandlaufgeschwindigkeit von 60 cm pro Minute jeweils durch die vorgenannten 5 gew.-%igen wässrigen Bindemittelflotten A1 bis A7 sowie V1 bis V3 geleitet. Durch anschließende Absaugung der wässrigen Bindemittelflotten wurde der Nassauftrag auf 216 g/m$^2$ (entsprechend 10,8 g/m$^2$ Bindemittel als Feststoff gerechnet) eingestellt. Die so erhaltenen imprägnierten Glasfaservliese wurden in einem Mathis-Ofen auf einen Kunststoffnetz als Träger für 3 Minuten bei 180 °C bei maximalen Heißluftstrom getrocknet/ausgehärtet. Nach dem Abkühlen auf Raumtemperatur wurden Prüfstreifen mit einer Größe von 240 x 50 mm in Faserlängsrichtung ausgestanzt. Die erhaltenen Prüfstreifen wurden anschließend für 24 Stunden bei 23 °C und 50 % relativer Luftfeuchtigkeit im Klimaraum gelagert. Die in Abhängigkeit von den eingesetzten Bindemittelflotten A1 bis A7 sowie V1 bis V3 erhaltenen Glasfaservliesprüfstreifen werden im Folgenden Prüfstreifen A1 bis A7 sowie V1 bis V3 bezeichnet.

Bestimmung Nassreißkraft

Zur Bestimmung der Nassreißkraft wurden die Prüfstreifen A1 bis A7 sowie V1 bis V3 für 15 Minuten bei 80 °C in entionisiertem Wasser gelagert und danach überschüssiges Wasser mit einem Baumwollgewebe abgetupft. Die Bestimmung der Reißkraft erfolgte an einer Zugprüfmaschine der Firma Zwick-Roell, Typ Z005. Die Prüfstreifen A1 bis A7 sowie V1 bis V3 wurden dabei so senkrecht eine Spannvorrichtung eingebracht, dass die freie Einspannlänge 200 mm betrug. Daran anschließend wurden die eingespannten Prüfstreifen mit einer Geschwindigkeit von 25 mm pro Minute in entgegen gesetzter Richtung bis zum Riss der Prüfstreifen auseinander gezogen. Je höher die zum Riss der Prüfstreifen erforderliche Kraft ist, desto besser ist die entsprechende Reißkraft zu bewerten. Es erfolgten jeweils 5 separate Messungen. Die in Tabelle 2 angegebenen Werte stellen jeweils den Mittelwert dieser Messungen dar.

Bestimmung der Vergilbung

Die Bestimmung der Vergilbung erfolgte mit einem Farbmessgerät der Fa. Lange in Anlehnung an DIN 5033 und DIN 6174. Dabei wurden die Prüfstreifen gegen eine weiße Prüfkachel als Referenz geprüft. Als Maß für die Vergilbung wurde der b*-Wert bestimmt (dabei beschreibt das CIELab-System die Farbe exakt im Farbraum, der aus drei Koordinatenachsen gebildet wird: L: Helligkeit, a*: rot-grün-Achse, b*: gelb-blau-Achse, negative b*-Werte sind blau, positive b*-Werte stehen für gelbe Farbtöne). Für die Messungen wurden jeweils 6 Prüfstreifen A1 bis A7 sowie V1 bis V3 übereinander gelegt und die Gelbfärbung an drei verschiedenen Stellen gemessen. Die in Tabelle 2 angegebenen b*-Werte stellen jeweils die Mittelwerte dieser Messungen dar. Dabei ist die Gelbfärbung umso stärker ausgeprägt, je größer der entsprechend angegebene b*-Wert ausfällt.

Tabelle 2: Zusammenfassung der Reißkraftergebnisse und der Vergilbungen

| Prüfstreifen | Nassreißkraft [N/50 mm] | Vergilbung [b*-Wert] |
|---|---|---|
| V1 | 36 | 0,9 |
| A1 | 49 | 1,2 |
| A2 | 58 | 1,3 |
| A3 | 57 | 1,3 |
| A4 | 62 | 1,2 |
| A5 | 69 | 0,9 |
| A6 | 66 | 0,8 |
| V2 | 47 | 1,2 |
| A7 | 62 | 1,4 |
| V3 | 58 | 1,5 |

Aus den Ergebnissen ist klar ersichtlich, dass sich die Bindemittelflotten A1 bis A7, welche durch Zusatz einer Stickstoffbase C hergestellt wurden, vorteilhaft auf die Nassreißkraft der mit diesen Bindemittelflotten hergestellten Faservliese auswirken. Darüber hinaus zeigt sich, dass die mit einer erfindungsgemäßen Bindemittelzusammensetzung hergestellten Faservliese eine annähernd gleiche oder verbesserte Nassreißkraft und eine geringere Vergilbung im Vergleich zu einer mit Triethanolamin hergestellten Bindemittelzusammensetzung aufweisen.

**Patentansprüche**

1. Wässriges Bindemittel für körnige und/oder faserförmige Substrate, enthaltend als wirksame Bestandteile

    a) wenigstens ein durch radikalische Polymerisation erhältliches Polymerisat, welches

$\geq$ 5 und $\leq$ 100 Gew.-% wenigstens einer $\alpha,\beta$-monoethylenisch ungesättigten Mono- oder Dicarbonsäure und/oder deren Anhydrid (Monomer A1), und

$\geq$ 0 und $\leq$ 95 Gew.-% wenigstens einer anderen ethylenisch ungesättigten Verbindung, welche mit den Monomeren A1 copolymerisierbar ist (Monomer A2),

    in einpolymerisierter Form enthält, wobei sich die Monomerenmengen A1 und A2 zu 100 Gew.-% addieren [Polymerisat A],
    b) wenigstens eine stickstofffreie Polyolverbindung mit wenigstens zwei Hydroxygruppen [Polyol B], und
    c) wenigstens eine hydroxygruppenfreie organische Stickstoffverbindung mit wenigstens einem $pK_B$-Wert $\leq$ 7 (gemessen bei 25 °C in entionisiertem Wasser) und/oder wenigstens eine hydroxygruppenfreie Imidazolverbindung [Stickstoffbase C].

2. Bindemittel nach Anspruch 1, wobei das Polymerisat A in einem wässrigen Medium gelöst oder dispergiert ist.

3. Bindemittel nach einem der Ansprüche 1 oder 2, wobei das Polymerisat A in einpolymerisierter Form aufgebaut ist aus

    $\geq$ 70 und $\leq$ 100 Gew.-% wenigstens eines Monomeren A1, und

(fortgesetzt)

| | |
|---|---|
| $\geq 0$ und $\leq 30$ Gew.-% | wenigstens eines Monomeren A2. |

4. Bindemittel nach Anspruch 1 bis 3, wobei das Polymerisat A in einpolymerisierter Form aufgebaut ist aus

| | |
|---|---|
| $\geq 85$ und $\leq 100$ Gew.-% | Acrylsäure, Methacrylsäure, Maleinsäure, Maleinsäureanhydrid und/oder Itaconsäure, und |
| $\geq 0$ und $\leq 15$ Gew.-% | Methylacrylat, Ethylacrylat, n-Butylacrylat, 2-Ethylhexylacrylat, Methylmethacrylat und/oder Styrol. |

5. Bindemittel nach einem der Ansprüche 1 bis 4, wobei als Polyol B ausgewählt ist aus der Gruppe umfassend Glyzerin, Trimethylolpropan und Polyvinylalkohol.

6. Bindemittel nach einem der Ansprüche 1 bis 5, wobei die Stickstoffbase C bei 20 °C eine Löslichkeit $\geq 0,5$ g in 100 g entionisiertem Wasser aufweist.

7. Bindemittel nach einem der Ansprüche 1 bis 6, wobei die Stickstoffbase C einen Siedepunkt $\geq 40$ °C bei 1 atm (absolut) aufweist.

8. Bindemittel nach einem der Ansprüche 1 bis 7, wobei die Stickstoffbase C ausgewählt ist aus der Gruppe umfassend n-Propylamin, n-Butylamin, n-Hexylamin, Diethylamin, Di-n-propylamin, Di-n-butylamin, Triethylamin, Tri-n-propylamin, Imidazol und 1-Methylimidazol.

9. Bindemittel nach einem der Ansprüche 1 bis 8, wobei das Äquivalentverhältnis der Carboxylgruppen des Polymerisats A zu den Hydroxylgruppen des Polyols B 20 : 1 bis 1 : 1 beträgt.

10. Bindemittel nach einem der Ansprüche 1 bis 9, wobei die Menge an Stickstoffbase C 0,1 bis 20 Gew.-Teile, bezogen auf 100 Gew.-Teile Polymerisat A beträgt.

11. Bindemittel nach einem der Ansprüche 1 bis 10, wobei die Menge an Phosphorkomponenten < 1 Gew.-%, bezogen auf die Summe der Mengen an Polymerisat A und Polyol B beträgt.

12. Verfahren zur Herstellung eines Formkörpers aus einem körnigen und/oder faserförmigen Substrat, **dadurch gekennzeichnet, dass** ein wässriges Bindemittel gemäß einem der Ansprüche 1 bis 11 auf das körnige und/oder faserförmige Substrat aufgebracht wird, gegebenenfalls das mit dem Bindemittel behandelte körnige und/oder faserförmige Substrat in Form gebracht wird und anschließend das behandelte körnige und/oder faserförmige Substrat einem thermischen Behandlungsschritt bei einer Temperatur 100°C unterzogen wird.

13. Verfahren nach Anspruch 12, **dadurch gekennzeichnet, dass** pro 100 g körniges und/oder faserförmiges Substrat $\geq 0,1$ g und $\leq 100$ g wässriges Bindemittel (berechnet als Summe der Gesamtmengen von Polymerisat A, Polyol B und Stickstoffbase C auf Feststoffbasis) eingesetzt werden.

14. Verfahren nach Anspruch 12 oder 13, **dadurch gekennzeichnet, dass** vor dem thermischen Behandlungsschritt ein Trocknungsschritt erfolgt.

15. Formkörper erhältlich nach einem Verfahren gemäß einem der Ansprüche 12 bis 14.

**Claims**

1. An aqueous binder for granular and/or fibrous substrates, comprising as active constituents

    a) at least one polymer obtainable by free-radical polymerization and comprising

≥ 5 and ≤ 100 wt%    of at least one α,β-monoethylenically unsaturated mono- or dicarboxylic acid and/or anhydride (monomer A1), and

≥ 0 and ≤ 95 wt%    of at least one other ethylenically unsaturated compound which is copolymerizable with the monomers A1 (monomer A2),

in polymerized form, wherein the monomer amounts A1 and A2 sum to 100 wt% [polymer A],
b) at least one nitrogen-free polyol compound having at least two hydroxyl groups [polyol B], and
c) at least one hydroxyl-free organic nitrogen compound having at least one pKB value ≤ 7 (measured at 25°C in deionized water) and/or at least one hydroxyl-free imidazole compound [nitrogen base C].

2.   The binder according to claim 1 wherein the polymer A is dissolved or dispersed in an aqueous medium.

3.   The binder according to either of claims 1 and 2 wherein the polymer A is constructed in polymerized form of

≥ 70 and ≤ 100 wt%    of at least one monomer A1, and
≥ 0 and ≤ 30 wt%    of at least one monomer A2.

4.   The binder according to claim 1 or 2 or 3 wherein the polymer A is constructed in polymerized form of

≥ 85 and ≤ 100 wt%    of acrylic acid, methacrylic acid, maleic acid, maleic anhydride and/or itaconic acid, and
≥ 0 and ≤ 15 wt%    of methyl acrylate, ethyl acrylate, n-butyl acrylate, 2-ethylhexyl acrylate, methyl methacrylate and/or styrene.

5.   The binder according to any one of claims 1 to 4 wherein the polyol B is selected from the group comprising glycerol, trimethylolpropane and polyvinyl alcohol.

6.   The binder according to any one of claims 1 to 5 wherein the nitrogen base C at 20°C has a solubility 0.5 g in 100 g of deionized water.

7.   The binder according to any one of claims 1 to 6 wherein the nitrogen base C has a boiling point ≥ 40°C at 1 atm (absolute).

8.   The binder according to any one of claims 1 to 7 wherein the nitrogen base C is selected from the group comprising n-propylamine, n-butylamine, n-hexylamine, diethylamine, di-n-propylamine, di-n-butylamine, triethylamine, tri-n-propylamine, imidazole and 1-methylimidazole.

9.   The binder according to any one of claims 1 to 8 wherein the equivalent ratio of carboxyl groups on polymer A to hydroxyl groups on polyol B is in the range from 20:1 to 1:1.

10.  The binder according to any one of claims 1 to 9 wherein the amount of nitrogen base C is in the range from 0.1 to 20 parts by weight, based on 100 parts by weight of polymer A.

11.  The binder according to any one of claims 1 to 10 wherein the amount of phosphorus components is < 1 wt%, based on the summed amounts of polymer A and polyol B.

12.  A process for producing a shaped article from a granular and/or fibrous substrate, which process comprises applying an aqueous binder according to any one of claims 1 to 11 to the granular and/or fibrous substrate, optionally shaping the binder-treated granular and/or fibrous substrate and then subjecting the treated granular and/or fibrous substrate to a thermal treatment step at a temperature ≥ 100°C.

13.  The process according to claim 12 wherein ≥ 0.1 g and ≤ 100 g of aqueous binder (reckoned as summed total amounts of polymer A, polyol B and nitrogen base C, on solids) is or are used per 100 g of granular and/or fibrous substrate.

EP 2 502 944 B1

**14.** The process according to claim 12 or 13 wherein the thermal treatment step is preceded by a drying step.

**15.** A shaped article obtainable by a process according to any one of claims 12 to 14.

**Revendications**

**1.** Liant aqueux pour substrats granulaires et/ou fibreux, contenant comme composants actifs

a) au moins un polymérisat pouvant être obtenu par polymérisation radicalaire, qui contient sous forme incorporée par polymérisation

$\geq 5$ et $\leq 100$ % en poids d'au moins un acide mono- ou dicarboxylique à insaturation $\alpha,\beta$-mono-éthylénique et/ou son anhydride (monomère A1),

$\geq 0$ et $\leq 95$ % en poids d'au moins un autre composé à insaturation éthylénique, qui est copolymérisable avec les monomères A1 (monomère A2),

la somme des quantités des monomères A1 et A2 étant égale à 100 % en poids [polymérisat A],
b) au moins un composé polyol exempt d'azote, comportant au moins deux groupes hydroxy [polyol B], et
c) au moins un composé azoté organique exempt de groupe hydroxy, ayant au moins un $pK_B \leq 7$ (mesuré à 25 °C dans de l'eau désionisée) et/ou au moins un composé imidazole exempt de groupe hydroxy [base azotée C].

**2.** Liant selon la revendication 1, dans lequel le polymérisat A est dissous ou dispersé dans un milieu aqueux.

**3.** Liant selon l'une quelconque des revendications 1 et 2, dans lequel le polymérisat A est constitué sous forme incorporée par polymérisation de
$\geq 70$ et $\leq 100$ % en poids d'au moins un monomère A1, et
$\geq 0$ et $\leq 30$ % en poids d'au moins un monomère A2.

**4.** Liant selon l'une quelconque des revendications 1 à 3, dans lequel le polymérisat A est constitué sous forme incorporée par polymérisation de

$\geq 85$ et $\leq 100$ % en poids d'acide acrylique, acide méthacrylique, acide maléique, anhydride maléique et/ou acide itaconique, et

$\geq 0$ et $\leq 15$ % en poids d'acrylate de méthyle, acrylate d'éthyle, acrylate de n-butyle, acrylate de 2-éthylhexyle, de méthacrylate de méthyle et/ou de styrène.

**5.** Liant selon l'une quelconque des revendications 1 à 4, dans lequel le polyol B est choisi dans le groupe comprenant le glycérol, le triméthylolpropane et le poly(alcool vinylique).

**6.** Liant selon l'une quelconque des revendications 1 à 5, dans lequel la base azotée C présente à 20 °C une solubilité $\geq 0,5$ g dans 100 g d'eau désionisée.

**7.** Liant selon l'une quelconque des revendications 1 à 6, dans lequel la base azotée C présente un point d'ébullition $\geq 40$ °C sous 1 atm (absolue).

**8.** Liant selon l'une quelconque des revendications 1 à 7, dans lequel la base azotée C est choisie dans le groupe comprenant la n-propylamine, la n-butylamine, la n-hexylamine, la diéthylamine, la di-n-propylamine, la di-n-butylamine, la triéthylamine, la tri-n-propylamine, l'imidazole et le 1-méthylimidazole.

**9.** Liant selon l'une quelconque des revendications 1 à 8, dans lequel le rapport d'équivalents des groupes carboxy du polymérisat A aux groupes hydroxy du polyol B vaut de 20 : 1 à 1 : 1.

**10.** Liant selon l'une quelconque des revendications 1 à 9, dans lequel la quantité de la base azotée C vaut de 0,1 à 20 parties en poids, par rapport à 100 parties en poids de polymérisat A.

**11.** Liant selon l'une quelconque des revendications 1 à 10, dans lequel la quantité de composants phosphorés est < 1 % en poids, par rapport à la somme des quantités du polymérisat A et du polyol B.

**12.** Procédé pour la production d'un corps moulé à partir de substrat granulaire et/ou fibreux, **caractérisé en ce qu'**on applique un liant aqueux selon l'une quelconque des revendications 1 à 11 sur le substrat granulaire et/ou fibreux, éventuellement on met en forme le substrat granulaire et/ou fibreux traité par le liant et ensuite on soumet à une étape de traitement thermique à une température ≥ 100 °C le substrat granulaire et/ou fibreux traité.

**13.** Procédé selon la revendication 12, **caractérisé en ce que** pour 100 g de substrat granulaire et/ou fibreux on utilise ≥ 0,1 g et ≤ 100 g de liant aqueux (calculé en tant que somme des quantités totales de polymérisat A, polyol B et base azotée C sur la base de la matière solide).

**14.** Procédé selon la revendication 12 ou 13, **caractérisé en ce qu'**avant l'étape de traitement thermique ou effectue une étape de séchage.

**15.** Corps moulé pouvant être obtenu conformément à un procédé selon l'une quelconque des revendications 12 à 14.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4076917 A
- EP 445578 A
- EP 583086 A
- EP 651088 A
- EP 672920 A
- DE 2214450 A
- US 5143582 A
- US 200482689 A
- WO 9909100 A
- WO 1034645 A
- EP 11154347 A
- DE 4003422 A
- WO 9745461 A

**In der Beschreibung aufgeführte Nicht-Patentliteratur**

- Emulsionspolymerisation in Encyclopedia of Polymer Science and Engineering. 1987, vol. 8, 659 ff
- **D.C. BLACKLEY.** *High Polymer Latices,* 1966, vol. 1, 35 ff
- **H. WARSON.** The Applications of Synthetic Resin Emulsions. 1972, 246 ff
- **D. DIEDERICH.** *Chemie in unserer Zeit,* 1990, vol. 24, 135-142
- Emulsion Polymerisation. Interscience Publishers, 1965
- **F. HÖLSCHER.** Dispersionen synthetischer Hochpolymerer. Springer-Verlag, 1969
- **A. ECHTE.** Handbuch der Technischen Polymerchemie. VCH, 1993
- **B. VOLLMERT.** Grundriss der Makromolekularen Chemie. E. Vollmert Verlag, 1988, vol. 1
- **L. KOTZEVA.** *J. Polym. Sci.,* 1989, vol. A-27 (4), 1325ff
- **C. ERBIL et al.** *Polymer,* 2000, vol. 41, 1391ff
- **C. YANG ; X. LU YUN.** *J. Polym. Sci.,* 2000, vol. 75 (2), 327ff
- **M. SEN et al.** *Polymer,* 1999, vol. 40 (9), 913ff
- **F. WANG et al.** *Anal. Chem.,* 1996, vol. 68, 2477ff
- **J. VELADA et al.** *Macromol. Chem. and Phys.,* 1995, vol. 196, 3171ff
- **J.M. COWIE ; C. HAQ.** *Br. Polym. J.,* 1977, vol. 9, 241ff
- **J. VELADA et al.** *Polymer Degradation and Stability,* 1996, vol. 52, 273ff
- **A. HORTA et al.** *Makromol. Chem., Rapid Commun.,* 1987, vol. 8, 523ff
- **T. HIRANO et al.** *J. Polym. Sci.,* 2000, vol. A-38, 2487ff
- **B.E. TATE.** *Adv. Polymer Sci.,* 1967, vol. 5, 214ff
- Kolloid-Zeitschrift & Zeitschrift für Polymere. vol. 190, 1
- **T.G. FOX.** *Bull. Am. Phys. Soc.,* 1956, vol. 1, 123
- Ullmann's Encyclopädie der technischen Chemie. Verlag Chemie, 1980, vol. 19, 18
- Ullmann's Encyclopedia of Industrial Chemistry. VCH, 1992, vol. A21, 169
- **J. BRANDRUP ; E.H. IMMERGUT.** Polymer Handbook. J. Wiley, 1966
- POLYMER HANDBOOK. J.Wiley, 1975
- POLYMER HANDBOOK. J. Wiley, 1989
- **G. JANDER ; K.F. JAHR ; G. SCHULZE.** Maßanalyse. Walter de Gruyter, 2002, 81
- **P. SYKES.** A Guidebook to Mechanism in Organic Chemistry, Forth Imprssion. 1963, 49 ff